(19) Europäisches Patentamt / European Patent Office / Office européen des brevets

(11) **EP 2 893 527 B1**

(12) **EUROPÄISCHE PATENTSCHRIFT**

(45) Veröffentlichungstag und Bekanntmachung des Hinweises auf die Patenterteilung:
**23.08.2017   Patentblatt 2017/34**

(21) Anmeldenummer: **13730112.3**

(22) Anmeldetag: **12.06.2013**

(51) Int Cl.:
*G08G 1/16* (2006.01)          *B60T 7/20* (2006.01)
*B60T 7/22* (2006.01)

(86) Internationale Anmeldenummer:
**PCT/EP2013/001734**

(87) Internationale Veröffentlichungsnummer:
**WO 2014/037064 (13.03.2014 Gazette 2014/11)**

(54) **VERFAHREN ZUM BETREIBEN EINES ANHÄNGEFAHRZEUGS ODER EINES LASTZUGES MIT DEM SYSTEM**

METHOD FOR OPERATING A TRAILER VEHICLE OR A TRUCK HAVING THE SYSTEM

SYSTÈME ET PROCÉDÉ DE FONCTIONNEMENT D'UN VÉHICULE TRACTÉ OU D'UN TRAIN ROUTIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2012   DE 102012017532**

(43) Veröffentlichungstag der Anmeldung:
**15.07.2015   Patentblatt 2015/29**

(73) Patentinhaber: **WABCO GmbH**
**30453 Hannover (DE)**

(72) Erfinder:
• **RISSE, Rainer**
**30982 Pattensen-Reden (DE)**
• **STENDER, Axel**
**31787 Hameln (DE)**
• **VON DER BEEKE, Jean-Christoph**
**38106 Braunschweig (DE)**

(74) Vertreter: **Lauerwald, Jörg**
**Wabco GmbH**
**Postfach 91 12 62**
**30432 Hannover (DE)**

(56) Entgegenhaltungen:
**EP-A1- 1 593 552          WO-A1-2005/039939**
**WO-A2-2007/042821     US-A1- 2003 141 965**
**US-B1- 6 894 608**

**Beschreibung**

Die Erfindung betrifft ein System gemäß dem Oberbegriff des Anspruchs 1 sowie ein Verfahren zum Betreiben eines Anhängefahrzeugs oder eines Lastzuges mit dem System.

Bekannt ist die Überwachung des Raumes außerhalb von Lastzügen mit Hilfe von Ultraschallsensoren, siehe DE 101 28 792 B4, US 2003/0141965 A1, GB 2476060 A, US 5,528,217 und WO 2008/121041 A1. Die drei zuerst genannten Schriften beziehen sich auch auf spezielle Lastzüge, nämlich bestehend aus Sattelauflieger und einem hierfür geeigneten Zugfahrzeug. Vorhandene Sensoren sind quer zur Fahrtrichtung ausgerichtet und erfassen einen durch eine sensorspezifische Abstrahlkeule definierten Raum seitlich neben dem Fahrzeug. Eine nahezu vollständige Abdeckung des Raumes auf einer Seite des Lastzuges wird gewährleistet durch Sensoren sowohl im Bereich der Anhängefahrzeuge als auch des Zugfahrzeugs. Sofern das Zugfahrzeug keine Sensoren aufweist, ist die Abdeckung unvollständig. Die Schrift US 6 894 608 B1 offenbart ein Antikollisionssystem für Fahrzeuge. Ein besonderes Problem ergibt sich für den Fahrer eines Lastzuges beim Abbiegen in Richtung zur Beifahrerseite. Der Fahrer kann die Seite nicht einsehen. Der Seitenspiegel weist einen toten Winkel auf. Besonders kritisch sind Situationen, in denen Objekte seitlich neben dem Lastzug zunächst im Spiegel erst sichtbar und dann unsichtbar sind. Dies ist beispielsweise der Fall, wenn nach dem Überholen eines Radfahrers zum Abbiegen abgebremst wird, so dass der Radfahrer wieder aufholt, aus dem Blickfeld des Spiegels verschwindet, sich aber noch seitlich neben dem Zugfahrzeug befindet. Ähnliches gilt für andere langsame Fahrzeuge oder Fußgänger. Der Fahrer müsste in einer derartigen Situation ständig den Rückspiegel beobachten, um wenigstens näherungsweise den Standort des Radfahrers abschätzen zu können.

Aufgabe der vorliegenden Erfindung ist die Schaffung eines Systems bzw. eines Verfahrens, mit dem die seitliche Überwachung einer Kombination von Fahrzeugen mit möglichst geringem Aufwand möglich ist. Insbesondere soll ein Raum seitlich neben einem Zugfahrzeug überwacht werden, vorzugsweise vor einer Hinterachse eines Sattelaufliegers

Zur Lösung der Aufgabe weisen das erfindungsgemäße System die Merkmale des Anspruchs 1 und ein erfindungsgemäßes Verfahren die Merkmale des Anspruchs 8 auf. Ein speziell auf den Betrieb eines Lastzuges mit Sattelauflieger gerichtetes Verfahren beinhaltet die Merkmale des Anspruchs 15.

Erfindungsgemäß ist vorgesehen, dass in einer mindestens aus zwei Fahrzeugen bestehenden Kombination aus Zugfahrzeug und wenigstens einem Anhängefahrzeug, wobei ein oder mehrere Sensoren an dem Anhängefahrzeug angeordnet sind, mindestens ein Sensor den Raum seitlich, in Fahrtrichtung vor dem mit Sensoren versehenen Anhängefahrzeug überwacht. Die Sensoren bzw. der mindestens eine Sensor sind insbesondere seitlich am Anhängefahrzeug angeordnet. Das vorlaufende Zugfahrzeug benötigt keine eigenen Sensoren, da der Raum seitlich neben dem Zugfahrzeug durch wenigstens einen Sensor des Anhängefahrzeugs überwacht wird. Das System erfüllt seine Aufgabe auch dann, wenn das Zugfahrzeug keine Sensoren aufweist.

Außerdem ist es möglich mit dem mindestens einen, vorausgerichteten Sensor auch Relativbewegungen zwischen Zugfahrzeug und Anhängefahrzeug zu detektieren, insbesondere dann, wenn sich Aufbauten des Zugfahrzeugs innerhalb der Abstrahlkeule des Sensors bewegen, auch Aufbauten mit aufrechten Kanten quer zur Abstrahlkeule. Eine aufrechte, meist abgerundete Kante bildet beispielsweise einen Übergang zwischen Rückwand und Seitenwand eines Fahrerhauses einer Sattelzugmaschine. Als Aufbauten im Sinne der Erfindung gelten auch speziell für die Detektion durch den Sensor vorgesehene und am vorlaufenden Fahrzeug angeordnete Markierungen, Reflektoren oder andere Bauelemente.

Im einfachsten Fall weist das System nur einen Sensor auf der Beifahrerseite des Anhängefahrzeugs auf. Möglich ist auch die Anordnung mehrerer in Fahrtrichtung aufeinander folgender Sensoren auf der Beifahrerseite. Schließlich können ein oder mehrere aufeinander folgende Sensoren alternativ oder zusätzlich auf der Fahrerseite des Anhängefahrzeugs vorgesehen sein.

Nach einem weiteren Gedanken der Erfindung ist vorgesehen, dass die Sensoren einen begrenzten Abstrahlraum, insbesondere Abstrahlkegel oder Abstrahlkeule aufweisen, wobei der Abstrahlraum so gerichtet ist, dass überwiegend oder ausschließlich ein Raum in Vorwärtsfahrtrichtung vor dem jeweiligen Sensor überwacht wird. Der gegen die Fahrtrichtung liegende Raum wird in diesem Fall ausgespart und/oder kann durch einen mit Abstand nachfolgend angeordneten Sensor überwacht werden.

Vorteilhafterweise handelt es sich bei dem Sensor um einen Ultraschall-Sensor. Derartige Sensoren sind bekannt und bewährt und insbesondere in sogenannter Transceiver-Technik ausgeführt, nämlich mit Sender und Empfänger in einem Bauteil.

Erfindungsgemäß kann ein Sensor im Bereich eines Übergangs zwischen einer Fahrzeugseite und einer Fahrzeugvorderseite des Anhängefahrzeugs angeordnet sein. Insbesondere ist der Sensor dabei noch seitlich, also an der Fahrzeugseite angeordnet. Dadurch wird ein toter Winkel bei Geradeausfahrt vermieden.

Nach einem weiteren Gedanken der Erfindung ist vorgesehen, dass am Anhängefahrzeug wenigstens zwei Sensoren auf einer Seite angeordnet sind, insbesondere derart, dass ein hinterer Sensor einen Raum seitlich neben dem Anhängefahrzeug überwacht und ein vorderer Sensor den Raum seitlich vor dem Anhängefahrzeug bzw. seitlich neben dem Zugfahrzeug. Durch entsprechende Anzahl und/oder Charakteristika geeigneter Sensoren kann so die gesamte Seite einer Kombination aus Zugfahrzeug und Anhängefahrzeug abgedeckt werden. Vorteilhafterweise ist ein Sensor so ausgerichtet, dass ein Übergang zwischen Rückwand und Seitenwand des dem Anhängefahrzeug vorlaufenden Fahrzeugs oder Aufbauten des vorlaufenden Fahrzeugs zumindest beim Abbiegen des letzteren detektierbar ist. Beim Abbiegen bewegt sich das vorlaufende Fahrzeug aus der Spur des Anhängefahrzeugs zur Seite. Diese Bewegung wird vom Sensor detektiert. Auch ändert sich der Abstand der Rückwand oder der Aufbauten zum Sensor. Daraus lässt sich ein Knickwinkel zwischen den Fahrzeugen berechnen.

Erfindungsgemäß kann ein Sensor so ausgerichtet sein, dass vor einer Hinterachse des dem Anhängefahrzeug vorlaufenden Fahrzeugs liegende Aufbauten des vorlaufenden Fahrzeugs zumindest beim Abbiegen des letzteren detektierbar sind.

Gemäß dem erfindungsgemäßen Verfahren zum Betreiben eines Anhängefahrzeugs mit dem System können in Abhängigkeit von mittels der Sensoren ermittelten Daten Aktionen ausgelöst werden. Alternativ oder in Kombination miteinander werden folgende Aktionen im Rahmen der Erfindung bevorzugt, andere Aktionen sind aber nicht ausgeschlossen:

- Im Zugfahrzeug werden Warnsignale ausgegeben, etwa in einer Fahrerkabine. Die Übertragung von Daten oder Steuerbefehlen vom Anhängefahrzeug zum Zugfahrzeug kann über einen im Fahrzeugbereich verbreiteten CAN-Bus oder eine andere Art der Datenübertragung erfolgen.

- An mindestens einem der Fahrzeuge werden Warnsignale ausgegeben, insbesondere an dem mit den Sensoren versehenen Anhängefahrzeug. So kann das Anhängefahrzeug akustische oder optische Signaleinrichtungen aufweisen, etwa einen Lautsprecher und durch Ansteuerung desselben Verkehrsteilnehmer seitlich neben dem Anhängefahrzeug oder davor warnen.

- Das mit den Sensoren versehene Fahrzeug wird angebremst, insbesondere mit mehreren, aufeinanderfolgenden Signalbremsungen. Der Fahrer merkt dadurch unmittelbar, dass eine Gefahr besteht und kann sich darauf einstellen.

- Das mit den Sensoren versehene Fahrzeug wird voll eingebremst. Eine Kollision kann dadurch in den meisten Fällen vermieden werden.

Nach einem weiteren Gedanken der Erfindung ist es vorgesehen, dass fahrdynamische Regelungen zumindest an dem mit den Sensoren versehenen Fahrzeug ausgelöst werden, insbesondere in Verbindung mit wenigstens einer der nachfolgenden Aktionen:

a) Betätigung von Bremsen.
b) Beeinflussung von Dämpfern.
c) Beeinflussung von Federn.

Moderne Anhängefahrzeuge für Lastkraftwagen weisen über elektronische Schalteinheiten (ECUs) angesteuerte elektropneumatische Bremsen und eine elektronisch gesteuerte Luftfederung auf. Eine gezielte Beeinflussung dieser Einrichtungen auf der Grundlage der von den Sensoren gelieferten Daten ist regelungstechnisch leicht machbar. Vorzugsweise ist wenigstens eines der nachfolgenden Ereignisse als Auslöser für Aktionen, insbesondere für fahrdynamische Regelungen vorgesehen:

a) Im Überwachungsbereich der Sensoren befindet sich ein Objekt und wird detektiert.
b) Ein Objekt im Überwachungsbereich kommt dem mit den Sensoren versehenen Fahrzeug näher.
c) Ein Objekt im Überwachungsbereich kommt dem vorlaufenden Fahrzeug näher.
d) Ein Objekt behält seinen Abstand zu einem der Fahrzeuge.

Nach einem weiteren Gedanken der Erfindung ist vorgesehen, dass auf der Grundlage der von einem vorderen Sensor ermittelten Daten ein Knickwinkel zwischen Anhängefahrzeug und hierzu vorlaufendem Fahrzeug bestimmt wird, und dass in Abhängigkeit vom Knickwinkel und/oder einer vorgegebenen Geschwindigkeit Aktionen ausgelöst werden. Außerdem kann vorgesehen sein, dass unterhalb eines vorgegebenen Knickwinkels zwischen Anhängefahrzeug und hierzu vorlaufendem Fahrzeug und/oder oberhalb einer vorgegebenen Geschwindigkeit keine Aktionen ausgelöst werden. Der Knickwinkel ist bei niedrigen Geschwindigkeiten für die Ermittlung des Abbiegens besser geeignet als die in modernen Fahrzeugen grundsätzlich mögliche Bestimmung von Raddrehzahldifferenzen. Letztere sind erst bei höheren Geschwindigkeiten mit ausreichender Genauigkeit berechenbar.

Beispielsweise wird das System erst aktiviert oder bei aktiviertem System werden Aktionen erst dann ausgelöst, wenn sich das Fahrzeug unterhalb einer Grenzgeschwindigkeit bewegt, etwa unterhalb 30 km/h, wenn ein vorgegebener Knickwinkel überschritten ist und/oder wenn ein Blinker auf der mit wenigstens einem Sensor versehenen Seite aktiviert wird. Bevorzugte Aktionen sind fahrdynamische Regelungen oder die Ausgabe von Warnsignalen.

Ein erfindungsgemäßes Verfahren bezieht sich auf den Betrieb eines Lastzuges aus Sattelauflieger als Anhängefahrzeug und Sattelzugmaschine als Zugfahrzeug, mit einem erfindungsgemäßen System, wobei die Sattelzugmaschine vor einer Hinterachse liegende Aufbauten aufweist. Die Aufbauten werden von einem am Anhängefahrzeug angeordneten Sensor detektiert, zumindest beim Abbiegen der Sattelzugmaschine, wobei der Sensor einen Raum seitlich, in Fahrtrichtung vor dem Anhängefahrzeug überwacht. Auf der Grundlage der vom Sensor ermittelten Daten werden Aktionen ausgelöst. Beim Abbiegen der Sattelzugmaschine knickt diese relativ zum Sattelauflieger seitlich ab. Dabei gelangen die vor der Hinterachse der Sattelzugmaschine liegenden Aufbauten mit ihrer Rückseite in den Bereich des Sensors. Somit kann allein durch die Installation des Systems im Sattelauflieger das Fahrverhalten der Sattelzugmaschine detektiert und für das Auslösen fahrdynamischer Regelungen genutzt werden.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:

Fig. 1 einen Lastzug aus Sattelauflieger und Sattelzugmaschine bei gerader Vorwärtsfahrt,
Fig. 2 den Lastzug gemäß Fig. 1 beim Abbiegen nach rechts,
Fig. 3 eine Abwandlung von Fig. 2, zur Darstellung der Berechnung eines Knickwinkels zwischen Sattelauflieger und Sattelzugmaschine.

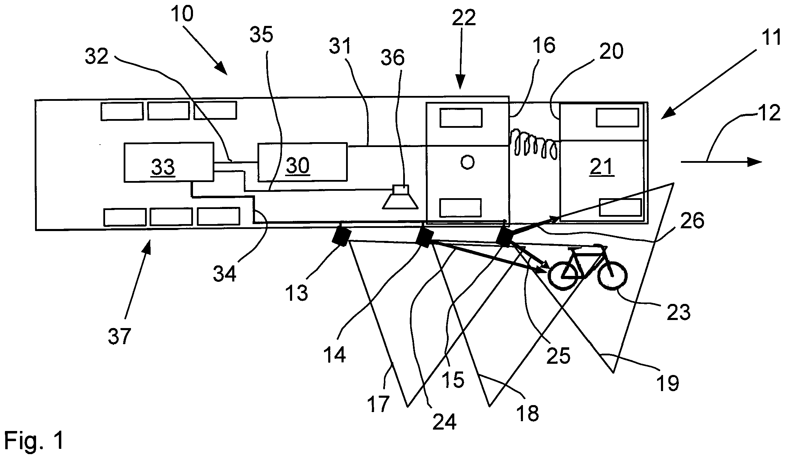

Ein Lastzug, bestehend aus Anhängefahrzeug 10 und Zugfahrzeug 11 fährt gemäß Fig. 1 geradeaus. Beide Fahrzeuge 10, 11 sind in Vorwärtsfahrtrichtung entsprechend Pfeil 12 ausgerichtet. Letzterer weist zugleich entlang einer Längsmittelachse des Anhängefahrzeugs. Das Anhängefahrzeug 10 ist hier ein Sattelauflieger, das Zugfahrzeug 11 eine daran angepasste Sattelzugmaschine.

Das Anhängefahrzeug 10 weist seitlich drei, in Fahrtrichtung aufeinanderfolgende Sensoren 13, 14, 15 auf, welche hier als Ultraschall-Sensoren ausgebildet sind. Der vordere Sensor 15 ist nahe einer Vorderwand oder Vorderkante 16 aber noch seitlich am Anhängefahrzeug 10 positioniert. Der mittlere Sensor 14 und der hintere Sensor 15 folgen mit gleichen Abständen zueinander. Der hintere Sensor 13 ist etwa kurz vor der halben Länge des Anhängefahrzeugs 10 positioniert.

Die Sensoren 13, 14, 15 weisen vorzugsweise gleiche Abstrahlkegel 17, 18, 19 auf, insbesondere mit einem Kegelwinkel von etwa 70°. Der Kegelwinkel ist so gewählt, um den Raum in Fahrtrichtung vor dem jeweiligen Sensor bis zum Raum etwa seitlich neben dem Sensor abzudecken. Der Abstrahlkegel 19 des vorderen Sensors 15 ist im Vergleich zu den beiden anderen Abstrahlkegeln 17, 18 leicht einwärtsgeschwenkt, so dass eine Rückseite 20 eines Fahrerhauses 21 des Zugfahrzeugs 11 bei Geradeausfahrt gemäß Fig. 1 mit detektiert wird. Die Rückseite 20 befindet sich bei dem speziell für den Sattelauflieger vorgesehenen Zugfahrzeug 11 mit Abstand vor einer Hinterachse 22 des Zugfahrzeugs 11. Ebenfalls noch vor der Hinterachse 22 des Zugfahrzeugs 11 und vor einem Drehpunkt/Position eines Königszapfens KP ist in diesem Fall der vordere Sensor 15 am Sattelauflieger als Anhängefahrzeug 10 angeordnet.

Entsprechend der Darstellung in Fig. 1 fährt neben dem Zugfahrzeug 11 ein Radfahrer, vereinfacht dargestellt durch ein Fahrrad 23. Der mittlere Sensor 14 und der vordere Sensor 15 detektieren das Fahrrad 23, da es sich im Bereich der zugehörigen Abstrahlkegel 18, 19 befindet. Ein Pfeil 24 verdeutlicht die Detektion des Fahrrads 23 durch den Sensor 14, ein Pfeil 25 durch den Sensor 15. Ein Pfeil 26 bezieht sich auf die Detektion der Rückseite 20 durch den Sensor 15. Durch seinen Abstrahlkegel 17 könnte auch der hintere Sensor 13 das Fahrrad 23 erfassen, jedoch ist die Reichweite zu kurz, wie dies in Fig. 1 auch dargestellt ist.

Die Sensoren 13, 14, 15 senden Töne bestimmter Frequenzen oder einer bestimmten Frequenz und empfangen die von den erfassten Objekten abgegebenen Echos. Je nach Anordnung und Reichweite empfängt jeder Sensor auch die Echos der von anderen Sensoren abgestrahlten Töne. So empfängt der mittlere Sensor 14 ein auf den vorderen Sensor 15 zurückgehendes Echo, während der vordere Sensor 15 Echos der vom mittleren Sensor 14 ausgesandten Töne empfängt. Analog gilt dies für die Sensoren 13 und 14. Durch geeignete und an sich bekannte Kopplung und Auswertung der Sensordaten ist es möglich Abstand und Relativgeschwindigkeit des Fahrrads 23 zu bestimmen und daraus Aktionen am Anhängefahrzeug 10 auszulösen.

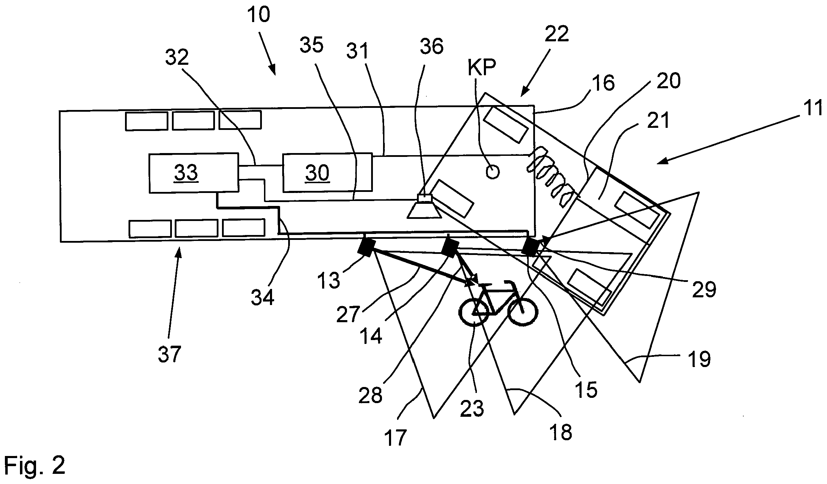

Für den vorliegenden Fall wird angenommen, dass der Lastzug etwas schneller ist als das Fahrrad 23, dieses langsam überholt und dann rechts abbiegt, siehe Fig. 2. Während sich das Fahrrad in Fig. 1 etwa seitlich neben dem Fahrerhaus 21 befindet, ist die Position des Fahrrads 23 in Fig. 2 etwa seitlich zwischen den Sensoren 14, 15. Bei Geradeausfahrt entspricht dies etwa der Position der Hinterachse 22 des Zugfahrzeugs 11.

Wie in Fig. 2 ersichtlich, ist das Fahrrad 23 nicht mehr im Abstrahlkegel 19 des vorderen Sensors 15, sondern wird nun von den Abstrahlkegeln 17, 18 des hinteren Sensors 13 und des mittleren Sensors 14 erfasst. Angedeutet ist dies durch Pfeile 27, 28.

Durch das Abbiegen des Zugfahrzeugs 11 knickt dieses relativ zum Anhängefahrzeug 10 ab, so dass die Rückseite 20 des Fahrerhauses 21 dichter an den vorderen Sensor 15 heranbewegt ist, siehe relativ kurzen Pfeil 29 in Fig. 2.

Aus den in der Situation gemäß Fig. 2 von den Sensoren gewonnenen Daten lässt sich ableiten, dass sich ein Objekt von der Größe eines Fahrrads rechts neben dem Zugfahrzeug 11 befindet und eine Kollisionsgefahr während des Abbiegens besteht. Außerdem ist aus den Daten des vorderen Sensors 15 ableitbar, wie stark ein Knickwinkel $\beta$ zwischen Anhängefahrzeug 10 und Zugfahrzeug 11 und wie groß der Kurvenradius des Lastzuges ist. Der Knickwinkel $\beta$ kann aus der Entfernung der Rückseite 20 zum Sensor 15 berechnet werden, ebenso der Kurvenradius und die Möglichkeit einer Kollision. Der Knickwinkel $\beta$ wird beispielsweise herangezogen zur Festlegung einer Eingriffsschwelle. Erst nach Überschreiten eines bestimmten Knickwinkels werden dann ein bewusstes Abbiegen angenommen und das System aktiviert oder Aktionen ausgelöst.

Das Anhängefahrzeug 10 ist hier mit einem elektronischen Bremssystem für elektropneumatische Bremsen ausgestattet. Eine dafür vorgesehene elektronische Schalteinheit 30 steht über eine Schnittstelle 31 nach ISO 7638 mit dem Zugfahrzeug 11 in Verbindung. An die elektronische Schalteinheit 30 ist im Anhängefahrzeug 10 über einen CAN-Bus 32 oder eine andere geeignete Datenverbindung mit einer weiteren elektronischen Schalteinheit 33 verbunden, welche für die Auswertung der von den Sensoren 13 bis 15 gelieferten Daten zuständig ist. Entsprechend sind die Sensoren 13 bis 15 über eine Leitung 34 an die elektronische Schalteinheit 33 angeschlossen. Mit letzterer ist über eine Leitung 35 auch ein Tonsignalgeber 36 verbunden.

In der elektronischen Schalteinheit 33 sind Regeln für Reaktionen auf bestimmte Sensordaten hinterlegt. Alternativ oder in Kombination miteinander sind insbesondere vier Eskalationsstufen möglich:

a) Im Fahrerhaus 21 wird eine Warnung durch ein Tonsignal und/oder Blinksignal ausgegeben. Die Übermittlung kann über den CAN-Bus 32 und die Schnittstelle 31 erfolgen.

b) Über den Tonsignalgeber 36 am Anhängefahrzeug 10 wird ein Tonsignal ausgegeben.

c) Am Anhängefahrzeug 10 werden Signalbremsungen durchgeführt, zum Beispiel dreimal aufeinanderfolgend mit jeweils 6,5 bar Bremsdruck.

d) Das Anhängefahrzeug 10 wird voll eingebremst.

Zusätzlich oder alternativ sind weitere Aktionen möglich.

Eine der Funktionen des elektronischen Bremssystems ist eine Antiblockierfunktion. Hierfür sind nicht gezeigte Raddrehzahlsensoren vorhanden, die mit der elektronischen Schalteinheit 30 verbunden sind, so dass ein Wert für die Momentangeschwindigkeit im Anhängefahrzeug 10 ohne Umweg über das Zugfahrzeug 11 zur Verfügung steht. Der Wert für die Momentangeschwindigkeit liegt über den CAN-Bus 32 auch in der elektronischen Schalteinheit 33 vor. Außerdem wird über den CAN-Bus auch die Aktivität von nicht gezeigten Blinkern des Anhängefahrzeugs 10 übermittelt. Entsprechend kann die elektronische Schalteinheit 33 Nebenbedingungen für die Aktivierung der Sensoren 13 bis 15 berücksichtigen, etwa eine Grenzgeschwindigkeit oder die Aktivierung der Blinker auf der rechten Fahrzeugseite. Beispielsweise ist die Überwachung mit den Sensoren 13 bis 15 nur aktiv, wenn das Anhängefahrzeug mit einer Geschwindigkeit von weniger als 30 km/h fährt und zugleich die Blinker der rechten Fahrzeugseite aktiviert sind.

In nicht gezeigter Weise können auch auf der linken Fahrzeugseite Sensoren vorgesehen sein. Im vorliegenden Fall wird davon ausgegangen, dass der Fahrer auf der linken Seite im Fahrerhaus 21 sitzt. Entsprechend ist die rechte Fahrzeugseite für den Fahrer schlecht einsehbar. Die Sensoren können aber auch auf beiden Seiten des Anhängefahrzeugs 10 vorgesehen sein.

Der besondere Vorteil des beschriebenen Systems liegt darin, dass es autark im Anhängefahrzeug 10 eingebaut sein kann, ohne dass ein entsprechendes System im Zugfahrzeug 11 vorhanden ist. Dabei kann der gesamte Bereich, je nach Anordnung der Sensoren, von einer Hinterachse 37 des Anhängefahrzeugs 10 bis zum Zugfahrzeug 11 überwacht werden.

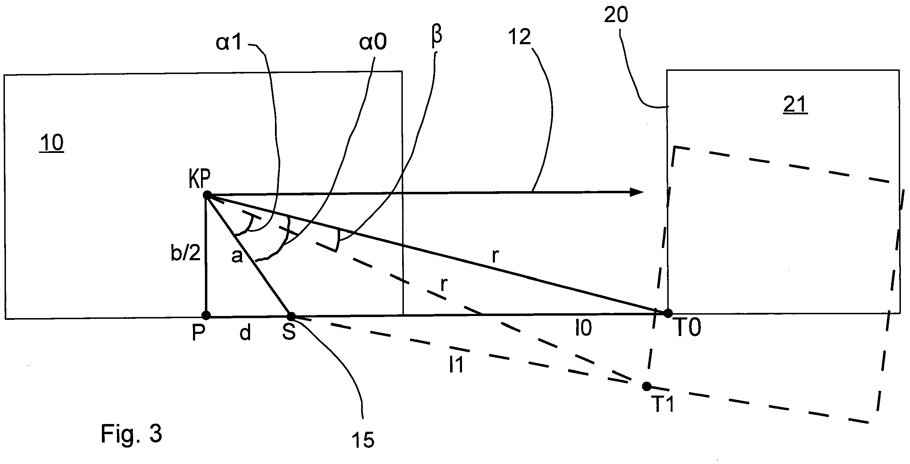

Anhand von Fig. 3 wird nachfolgend die Berechnung des Knickwinkels $\beta$ zwischen Anhängefahrzeug 10 und Zugfahrzeug 11 erläutert. Gemessen wird eine Länge l vom Sensor 15 bzw. einem Punkt S am Anhängefahrzeug 10 zur Rückseite 20 oder einem definierten Messpunkt am Zugfahrzeug 11. Gezeigt ist das Fahrerhaus 21 des Zugfahrzeugs 11 in zwei Positionen, nämlich

Position 0: Fahrerhaus 21 ist durchgezogen gezeichnet (ohne Knickwinkel / Geradeausfahrt) und
Position 1: Fahrerhaus 21 ist gestrichelt gezeichnet (mit Knickwinkel / Kurvenfahrt).

Dabei haben die in Fig. 3 angegebenen Punkte, Strecken und Winkel folgende Bedeutung:

KP: "king pin" - Position eines Königszapfens am Anhängefahrzeug 10

P: Hilfspunkt

S: Position des Sensors 15

T0: Position der Rückseite 20 bzw. Hinterkante des Fahrerhauses 21 des Zugfahrzeugs 11, die vom Sensor 15 detektiert wird, bei Geradeausfahrt

T1: Position der Rückseite 20 bzw. Hinterkante des Fahrerhauses 21 des Zugfahrzeugs 11, die vom Sensor 15 detektiert wird, bei Kurvenfahrt

a: Hilfsmaß

b/2: halbe Fahrzeugbreite

d: Versatz in Fahrzeuglängsrichtung (Pfeil 12) zwischen Königszapfen KP und Position des Sensors 15 (aus Parametrierung des Systems bekannt)

l0: Länge der Strecke von der Position des Sensors 15 zur Rückseite des Fahrerhauses 21 bei Geradeausfahrt

l1: Länge der Strecke von der Position des Sensors 15 zur Rückseite des Fahrerhauses 21 bei Kurvenfahrt

r: Drehradius der Messpunkte T0, T1 um den Königszapfen KP

$\alpha 0$: Drehwinkel (Winkel zwischen Hilfsmaß a und Radius r) bei Geradeausfahrt

$\alpha 1$: Drehwinkel (Winkel zwischen Hilfsmaß a und Radius r) bei Kurvenfahrt

$\beta$: Knickwinkel

Der gesuchte Knickwinkel $\beta$ ist die Differenz der Drehwinkel $\alpha 0$ bei Geradeausfahrt und $\alpha 1$ bei Kurvenfahrt.

$$\beta = \alpha 0 - \alpha 1 \qquad \text{(Gleichung 1)}$$

Aus dem Dreieck KP-S-T0 ergibt sich nach dem Kosinussatz:

$$l0^2 = r^2 + a^2 - 2{*}r{*}a{*}\cos(\alpha 0) \qquad \text{(Gleichung 2)}$$

und entsprechend für das Dreieck KP-S-T1:

$$l1^2 = r^2 + a^2 - 2{*}r{*}a{*}\cos(\alpha 1) \qquad \text{(Gleichung 3)}$$

umgeformt nach $\alpha 0$ bzw. $\alpha 1$:

$$\alpha 0 = \arccos\left[(r^2 + a^2 - l0^2)/(2{*}r{*}a)\right] \qquad \text{(Gleichung 4.1)}$$

$$\alpha 1 = \arccos\left[(r^2 + a^2 - l1^2)/(2{*}r{*}a)\right] \qquad \text{(Gleichung 4.2)}$$

Die Länge l0 wird bei Geradeausfahrt gemessen, z.B. bei einer ersten Fahrt zur Parametrierung des Gesamtsystems, wobei die Geradeausfahrt durch gleiche Raddrehzahlen von Rädern auf der linken und rechten Fahrzeugseite erkannt werden kann.

Ferner gilt bei Geradeausfahrt für das Dreieck: KP-P-T0 nach Pythagoras:

$$r^2 = (d + l0)^2 + (b/2)^2 \qquad \text{(Gleichung 5.1)}$$

$$\text{bzw.} \quad r = \sqrt{[(d + l0)^2 + (b/2)^2]} \qquad \text{(Gleichung 5.2)}$$

wobei die Fahrzeugbreite b sowie der längsseitige Versatz d zwischen Königszapfen KP und Position des Sensors 15 aus einer Parametrierung des Anhängefahrzeugs 10 bei Inbetriebnahme desselben bekannt sind.

Ebenso nach Pythagoras gilt für das Dreieck KP-P-S für das Hilfsmaß a:

$$a^2 = (b/2)^2 + d^2 \qquad \text{(Gleichung 6.1)}$$

$$\text{bzw.} \quad a = \sqrt{[(b/2)^2 + d^2]} \qquad \text{(Gleichung 6.2)}$$

Durch Einsetzen der Gleichungen 5.1, 5.2 sowie 6.1 und 6.2 in 4.1 und 4.2 erhält man für die Drehwinkel:

$$\alpha0 = \arccos \left[ ([(d + l0)^2 + (b/2)^2] + [(b/2)^2 + d^2] - l0^2) / [2*\sqrt{[(d + l0)^2 + (b/2)^2]} * \sqrt{[(b/2)^2 + d^2]}] \right] \qquad \text{(Gleichung 7.1)}$$

$$\alpha1 = \arccos \left[ ([(d + l0)^2 + (b/2)^2] + [(b/2)^2 + d^2] - l1^2) / [2*\sqrt{[(d + l0)^2 + (b/2)^2]} * \sqrt{[(b/2)^2 + d^2]}] \right] \qquad \text{(Gleichung 7.1)}$$

Dabei muss $\alpha0$ nur einmalig (nachdem l0 bekannt ist) berechnet werden und bleibt für dieses Zugfahrzeug 11 konstant.

Substituiert man

$$k1 = [(d + l0)^2 + (b/2)^2] + [(b/2)^2 + d^2] \qquad \text{(Gleichung 8.1)}$$

$$k2 = 2*\sqrt{\{[(d + l0)^2 + (b/2)^2] * [(b/2)^2 + d^2]\}} \qquad \text{(Gleichung 8.2)}$$

ergibt sich für den Knickwinkel $\beta$:

$$\beta = \alpha0 - \arccos \{[k1 - l1^2] / k2\} \qquad \text{(Gleichung 9).}$$

**Patentansprüche**

1. System mit ein oder mehreren Sensoren (13, 14, 15) zur Überwachung eines Raumes seitlich neben einer aus mindestens zwei Fahrzeugen bestehenden Kombination aus Zugfahrzeug (11) und wenigstens einem Anhängefahrzeug (10), wobei die Sensoren (13, 14, 15) an dem Anhängefahrzeug (10) angeordnet sind, wobei mindestens ein Sensor (15) am Anhängefahrzeug (10) den Raum seitlich, in Fahrtrichtung vor dem mit den Sensoren (13, 14, 15) versehenen Anhängefahrzeug (10) überwacht, **dadurch gekennzeichnet, dass** ein Sensor (15) so ausgerichtet ist, dass ein Übergang zwischen Rückwand und Seitenwand des dem Anhängefahrzeug (10) vorlaufenden Fahrzeugs oder Aufbauten des vorlaufenden Fahrzeugs zumindest beim Abbiegen des letzteren detektierbar ist.

2. System nach Anspruch 1, **dadurch gekennzeichnet, dass** die Sensoren (13, 14, 15) einen begrenzten Abstrahlraum, insbesondere Abstrahlkegel (17, 18, 19) oder Abstrahlkeule aufweisen, wobei der Abstrahlraum so gerichtet ist, dass überwiegend oder ausschließlich ein Raum in Fahrtrichtung vor dem jeweiligen Sensor (13, 14, 15) überwacht wird.

3. System nach Anspruch 1 oder 2, **dadurch gekennzeichnet, dass** der Sensor (13, 14, 15) ein Ultraschall-Sensor ist.

4. System nach Anspruch 1 oder einem der weiteren Ansprüche, **dadurch gekennzeichnet, dass** ein Sensor (15) im Bereich eines Übergangs zwischen einer Fahrzeugseite und einer Fahrzeugvorderseite angeordnet ist.

5. System nach Anspruch 1 oder einem der weiteren Ansprüche, **dadurch gekennzeichnet, dass** die Sensoren (13, 14, 15) auf einer Beifahrerseite vorgesehen sind.

6. System nach Anspruch 1 oder einem der weiteren Ansprüche, **dadurch gekennzeichnet, dass** am Anhängefahrzeug (10) wenigstens zwei Sensoren (13, 14, 15) auf einer Seite angeordnet sind, insbesondere derart, dass ein hinterer Sensor (13) einen Raum seitlich neben dem Anhängefahrzeug (10) überwacht und ein vorderer Sensor (15) den Raum seitlich vor dem Anhängefahrzeug (10).

7. System nach Anspruch 1 oder einem der weiteren Ansprüche, **dadurch gekennzeichnet, dass** ein Sensor (15) so ausgerichtet ist, dass vor einer Hinterachse des dem Anhängefahrzeug (10) vorlaufenden Fahrzeugs liegende Aufbauten des vorlaufenden Fahrzeugs zumindest beim Abbiegen des letzteren detektierbar sind.

8. Verfahren zum Betreiben eines Anhängefahrzeugs (10) mit einem System nach einem der voranstehenden Ansprüche 1 bis 7, **dadurch gekennzeichnet, dass** in Abhängigkeit von mittels der Sensoren (13, 14, 15) ermittelten Daten Aktionen ausgelöst werden.

9. Verfahren nach Anspruch 8, **dadurch gekennzeichnet, dass** im Zugfahrzeug (11) Warnsignale ausgegeben werden.

10. Verfahren nach Anspruch 8 oder 9, **dadurch gekennzeichnet, dass** an mindestens einem der Fahrzeuge Warnsignale ausgegeben werden, insbesondere an dem mit den Sensoren (13, 14, 15) versehenen Anhängefahrzeug (10).

11. Verfahren nach Anspruch 8 oder einem der weiteren Ansprüche, **dadurch gekennzeichnet, dass** das mit den Sensoren (13, 14, 15) versehene Fahrzeug angebremst wird, insbesondere mit mehreren, aufeinanderfolgenden Signalbremsungen.

12. Verfahren nach Anspruch 8 oder einem der weiteren Ansprüche, **dadurch gekennzeichnet, dass** das mit den Sensoren (13, 14, 15) versehene Fahrzeug voll eingebremst wird.

13. Verfahren nach Anspruch 8 oder einem der weiteren Ansprüche, **dadurch gekennzeichnet, dass** fahrdynamische Regelungen ausgelöst werden, zumindest an dem mit den Sensoren (13, 14, 15) versehenen Fahrzeug, insbesondere in Verbindung mit wenigstens einer der nachfolgenden Aktionen:

    a) Betätigung von Bremsen,
    b) Beeinflussung von Dämpfern,
    c) Beeinflussung von Federn.

14. Verfahren nach Anspruch 8 oder einem der weiteren Ansprüche, **dadurch gekennzeichnet, dass** wenigstens eines der nachfolgenden Ereignisse als Auslöser für Aktionen vorgesehen ist:

    a) im Überwachungsbereich der Sensoren (13, 14, 15) befindet sich ein Objekt und wird detektiert,
    b) ein Objekt im Überwachungsbereich kommt dem mit den Sensoren (13, 14, 15) versehenen Fahrzeug näher,
    c) ein Objekt im Überwachungsbereich kommt dem vorlaufenden Fahrzeug näher,
    d) ein Objekt behält seinen Abstand zu einem der Fahrzeuge.

15. Verfahren nach Anspruch 8 oder einem der weiteren Ansprüche, **dadurch gekennzeichnet, dass** auf der Grundlage der von einem vorderen Sensor (15) ermittelten Daten ein Knickwinkel zwischen Anhängefahrzeug (10) und hierzu vorlaufendem Fahrzeug bestimmt wird, und dass in Abhängigkeit vom Knickwinkel und/oder einer vorgegebenen Geschwindigkeit Aktionen ausgelöst werden.

16. Verfahren nach Anspruch 8 oder einem der weiteren Ansprüche, **dadurch gekennzeichnet, dass** unterhalb eines vorgegebenen Knickwinkels zwischen Anhängefahrzeug (10) und hierzu vorlaufendem Fahrzeug und/oder oberhalb einer vorgegebenen Geschwindigkeit keine Aktionen ausgelöst werden.

17. Verfahren zum Betreiben eines Lastzuges aus Sattelauflieger als Anhängefahrzeug (10) und Sattelzugmaschine als Zugfahrzeug (11), mit einem System nach einem der Ansprüche 1 bis 7, wobei die Sattelzugmaschine vor einer Hinterachse (22) liegende Aufbauten aufweist, **dadurch gekennzeichnet, dass** die Aufbauten von einem am Anhängefahrzeug (10) angeordneten Sensor (15) detektiert werden, zumindest beim Abbiegen der Sattelzugmaschine, wobei der Sensor (15) einen Raum seitlich, in Fahrtrichtung vor dem Anhängefahrzeug (10) überwacht, und dass auf der Grundlage der vom Sensor (15) ermittelten Daten Aktionen ausgelöst werden.

## Claims

1. System having one or more sensors (13, 14, 15) for monitoring a space to the side next to a combination composed of at least two vehicles, a towing vehicle (11) and at, least one trailer vehicle (10), wherein the sensors (13, 14, 15) are arranged on the trailer vehicle (10), wherein at least one sensor (15) on the trailer vehicle (10) monitors the space to the side, in the direction of travel in front of the trailer vehicle (10) which is provided with the sensors (13, 14, 15), **characterized in that** a sensor (15) is arranged in such a way that a junction between the rear wall and the side wall of the vehicle which is travelling ahead of the trailer vehicle (10), or structures of the vehicle travelling ahead, can be detected at least when said vehicle turns.

2. System according to Claim 1, **characterized in that** the sensors (13, 14, 15) have a limited irradiation space, in particular irradiation cones (17, 18, 19) or irradiation lobes, wherein the irradiation space is directed in such a way that a space in the direction of travel in front of the respective sensor (13, 14, 15) is mainly or exclusively monitored.

3. System according to Claim 1 or 2, **characterized in that** the sensor (13, 14, 15) is an ultrasound sensor.

4. System according to Claim 1 or one of the other claims, **characterized in that** a sensor (15) is arranged in the region of a junction between a vehicle side and a vehicle front side.

5. System according to Claim 1 or one of the other claims, **characterized in that** the sensors (13, 14, 15) are provided on a front seat passenger's side.

6. System according to Claim 1 or one of the other claims, **characterized in that** at least two sensors (13, 14, 15) are arranged on one side on the trailer vehicle (10), in particular in such a way that a rear sensor (13) monitors a space to the side next to the trailer vehicle (10), and a front sensor (15) monitors the space to the side in front of the trailer vehicle (10).

7. System according to Claim 1 or one of the other claims, **characterized in that** a sensor (15) is arranged in such a way that structures of the vehicle travelling ahead of the trailer vehicle (10) which are located in front of a rear axle of said vehicle travelling ahead can be detected at least when said vehicle turns.

8. Method for operating a trailer vehicle (10) having a system according to one of the preceding Claims 1 to 7, **characterized in that** actions can be triggered as a function of data determined by means of the sensors (13, 14, 15).

9. Method according to Claim 8, **characterized in that** the warning signals are output in the towing vehicle (11).

10. Method according to Claim 8 or 9, **characterized in that** warning signals are output at at least one of the vehicles, in particular at the trailer vehicle (10) which is provided with the sensors (13, 14, 15) .

11. Method according to Claim 8 or one of the other claims, **characterized in that** the vehicle which is provided with the sensors (13, 14, 15) is braked, in particular with a plurality of successive signal braking operations.

12. Method according to Claim 8 or one of the other claims, **characterized in that** the vehicle which is provided with the sensors (13, 14, 15) is braked to a standstill.

13. Method according to Claim 8 or one of the other claims, **characterized in that** the vehicle movement dynamic closed-loop control operations are triggered at least at the vehicle which is provided with the sensors (13, 14, 15), in particular in conjunction with at least one of the following actions:

   a) activation of brakes,
   b) influencing of shock absorbers, and
   c) influencing of springs.

14. Method according to Claim 8 or one of the other claims, **characterized in that** at least one of the following events is provided as a trigger for actions:

    a) an object is located in the monitoring range of the sensors (13, 14, 15,) and is detected,
    b) an object in the monitoring range approaches the vehicle which is provided with sensors (13, 14, 15),
    c) an object in the monitoring range approaches the vehicle travelling ahead, and
    d) an object maintains its distance from one of the vehicles.

**15.** Method according to Claim 8 or one of the other claims, **characterized in that** a bending angle between the trailer vehicle (10) and the vehicle travelling ahead thereof is determined on the basis of the data acquired by a front sensor (15), and **in that** actions are triggered as a function of the bending angle and/or a predefined speed.

**16.** Method according to Claim 8 or one of the other claims, **characterized in that** no actions are triggered bellow a predefined bending angle between the trailer vehicle (10) and the vehicle travelling ahead thereof and/or above a predefined speed.

**17.** Method for operating a load train composed of a semitrailer as a trailer vehicle (10) and a semitrailer tractor as a towing vehicle (11), having a system according to one of Claims 1 to 7, wherein the semitrailer tractor has structures located in front of a rear axle (22), **characterized in that** the structures are detected by a sensor (15) on the trailer vehicle (10), at least when the semitrailer tractor turns, wherein the sensor (15) monitors a space to the side in front of the trailer vehicle (10) in the direction of travel, and **in that** actions are triggered on the basis of the data acquired by the sensor (15).


## Revendications

**1.** Système comportant un ou plusieurs capteurs (13, 14, 15) servant à surveiller un espace situé latéralement à côté d'une combinaison d'au moins deux véhicules, comprenant un véhicule tracteur (11) et au moins un véhicule tracté (10), dans lequel les capteurs (13, 14, 15) sont disposés sur le véhicule tracté (10), dans lequel au moins un capteur (15) monté sur le véhicule tracté (10) surveille latéralement l'espace situé, dans le sens de marche, en amont du véhicule tracté (10) équipé des capteurs (13, 14, 15), **caractérisé en ce qu'**un capteur (15) est orienté de manière à ce qu'une transition entre une paroi arrière et une paroi latérale de véhicule précédant le véhicule tracté (10) ou des superstructures du véhicule précédent puisse au moins être détectée lorsque ce dernier effectue un virage.

**2.** Système selon la revendication 1, **caractérisé en ce que** les capteurs (13, 14, 15) présentent un espace d'émission limité, notamment un cône d'émission (17, 18, 19) ou un lobe d'émission, dans lequel l'espace d'émission est orienté de manière à surveiller un espace situé, dans le sens de marche, en amont du capteur (13, 14, 15) respectif.

**3.** Système selon la revendication 1 ou 2, **caractérisé en ce que** le capteur (13, 14, 15) est un capteur à ultrasons.

**4.** Système selon la revendication 1, **caractérisé en ce qu'**un capteur (15) est disposé dans la zone d'une transition entre un côté véhicule et un côté avant du véhicule.

**5.** Système selon la revendication 1, **caractérisé en ce que** les capteurs (13, 14, 15) sont prévus sur un côté passager.

**6.** Système selon la revendication 1 ou selon l'une quelconque des autres revendications, **caractérisé en ce qu'**au moins deux capteurs (13, 14, 15) sont disposés d'un côté du véhicule tracté (10), notamment de manière à ce qu'un capteur arrière (13) surveille un espace situé latéralement sur le côté du véhicule tracté (10) et à ce qu'un capteur avant (15) surveille l'espace situé latéralement en amont du véhicule tracté (10).

**7.** Système selon la revendication 1 ou selon l'une quelconque des autres revendications, **caractérisé en ce qu'**un capteur (15) est orienté de manière à ce que des superstructures du véhicule précédent, situées en amont d'un essieu arrière du véhicule précédant le véhicule tracté (10), puissent être détectée lorsque ledit véhicule précédent effectue un virage.

**8.** Procédé de mise en fonctionnement d'un véhicule tracté (10) au moyen d'un système selon l'une quelconque des revendications 1 à 7 précédentes, **caractérisé en ce que** des actions sont déclenchées en fonction de données obtenues au moyen des capteurs (13, 14, 15).

**9.** Procédé selon la revendication 8, **caractérisé en ce que** des signaux d'alarme sont émis dans le véhicule tracteur (11).

**10.** Procédé selon la revendication 8 ou 9, **caractérisé en ce que** des signaux d'alarme sont émis sur au moins l'un des véhicules, notamment sur le véhicule tracté (10) équipé des capteurs (13, 14, 15).

**11.** Procédé selon la revendication 8 ou selon l'une quelconque des autres revendications, **caractérisé en ce que** le véhicule équipé des capteurs (13, 14, 15) est freiné, notamment à l'aide de plusieurs freinages de signalisation consécutifs.

**12.** Procédé selon la revendication 8 ou selon l'une quelconque des autres revendications, **caractérisé en ce que** le véhicule équipé des capteurs (13, 14, 15) est freiné jusqu'à l'arrêt complet.

**13.** Procédé selon la revendication 8 ou selon l'une quelconque des autres revendications, **caractérisé en ce que** des régulations de la dynamique de roulage sont déclenchées, au moins sur le véhicule équipé des capteurs (13, 14, 15), notamment en association avec au moins l'une des actions suivantes :

a) actionnement de freins,
b) effet d'amortisseurs,
c) effet de suspensions.

**14.** Procédé selon la revendication 8 ou selon l'une quelconque des autres revendications, **caractérisé en ce qu'**au moins l'un des événements suivants est considéré en tant que déclencheur d'actions :

a) un objet est présent dans la zone de surveillance des capteurs (13, 14, 15) et est détecté,
b) un objet présent dans la zone de surveillance se rapproche du véhicule équipé des capteurs (13, 14, 15),
c) un objet présent dans la zone de surveillance se rapproche du véhicule précédent,
d) un objet maintient sa distance par rapport à l'un des véhicules.

**15.** Procédé selon la revendication 8 ou selon l'une quelconque des autres revendications, **caractérisé en ce qu'**un angle de déviation entre le véhicule tracté (10) et le véhicule qui le précède est déterminé sur la base des données obtenues par un capteur avant (15) et **en ce que** des actions sont déclenchées en fonction de l'angle de déviation et/ou d'une vitesse prédéterminée.

**16.** Procédé selon la revendication 8 ou selon l'une quelconque des autres revendications, **caractérisé en ce qu'**aucune action n'est déclenchée en dessous d'un angle de déviation prédéterminé entre le véhicule tracté (10) et le véhicule qui le précède et/ou au-dessus d'une vitesse prédéterminée.

**17.** Procédé de mise en fonctionnement d'un camion à remorque constitué d'un semi-remorque en tant que véhicule tracté (10) et d'un tracteur routier en tant que véhicule tracteur (11), comportant un système selon l'une quelconque des revendications 1 à 7, dans lequel le semi-remorque comporte des superstructures situées en amont d'un essieu arrière (22), **caractérisé en ce que** les superstructures sont détectées par un capteur (15) disposé sur le véhicule tracté (10), au moins lors d'une déviation du semi-remorque, dans lequel le capteur (15) surveille un espace situé latéralement, dans le sens de marche, en amont du véhicule tracté (10), et **en ce que** des actions sont déclenchées sur la base des données déterminées par le capteur (15).

Fig. 1

Fig. 2

EP 2 893 527 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10128792 B4
- US 20030141965 A1
- GB 2476060 A
- US 5528217 A
- WO 2008121041 A1
- US 6894608 B1